# EUROPEAN PATENT SPECIFICATION

(11) **EP 0 283 920 B1**
(45) Date of publication and mention of the grant of the patent: **18.05.1994**
(21) Application number: 88104203.0
(22) Date of filing: 16.03.1988
(51) Int. Cl.: C08J 7/04, B29C 55/12, C08J 9/00, C08L 23/00

(54) **Heat-sealable microporous polypropylene films**
Heissversiegelbare mikroporöse Polypropylenfolien
Pellicules microporeuses de polypropylène soudables à chaud

(30) Priority: 27.03.1987 US 30801
(43) Date of publication of application: 28.09.1988
(73) Proprietor: HERCULES INCORPORATED, Wilmington Delaware 19894 (US)
(72) Inventor: Hill, David James, Wilmington Delaware 19810 (US)
(74) Representative: Lederer, Franz, Dr.

(56) References cited:
- EP-A- 0 004 633
- GB-A- 1 044 068
- GB-A- 2 040 799
- US-A- 3 900 670
- Billmeyer: "Textbook of Polymer Science", 3rd Edition, 1984, pp. 362, 366

## Description

This invention relates to gas-permeable microporous polyolefin films and to methods for making them.

U.S. Patent 3,903,234 and 4,359,497 disclose extruded films of thermoplastic polymeric materials containing a relatively large concentration of certain filler materials and drawing the film either uniaxially or biaxially by a specified amount, thus producing biaxial or uniaxial orientation and causing the film to become less transparent or even opaque. The method disclosed in U.S. Patent 4,359,497 produces a film of butene-l polymer having a heterogeneous surface that is print-receptive but apparently maintains the barrier properties of the film. However, the properties achieved by the method disclosed are destroyed by heat-sealing.

GB-A-1 044 068 describes a method for forming a heat sealable polyolefin film wherein at least one surface of a linear highly crystalline polyolefin is coated with an olefin polymer.

The method disclosed in U.S. Patent 3,903,234 produces a microporous polyolefin film containing more than about 30% by weight of a particulate filler, by biaxial orientation that causes the polymer to tear away from the particles of the filler and create corresponding voids in the film. Such microporous films have important applications in packaging fruits, vegetables and plants, which retain freshness longer if stored in an appropriate atmosphere maintained by controlled transfer of oxygen, carbon dioxide and respired water vapor through the walls of the package. Such films are also used as gas-permeable cover stock in personal hygiene products such as catamenial napkins, panty liners and diapers.

US-A-3,900,670 discloses a laminated film structure comprising a base layer of a biaxially oriented film having a cellular matrix prepared from a polymer having a filler dispersed therein and a polymeric grease-proof layer, wherein the film laminate may include a sealing layer.

In many of these applications it is desirable to bond the film either to itself to form a package, or to another structural element in the item being manufacured. Such bonding of single-layer films by heat-sealing, particularly in the case of polypropylene films and films containing a particulate filler, is not practical and therefore is conventionally accomplished by adding an adhesive to the area of the film at which the seal or bond is made.

There is a need for a porous polyolefin film containing a particulate filler and biaxially oriented that is readily heat-sealable over its entire surface without disturbing its orientation and other characteristics, to avoid the need for an adhesive coating.

According to the invention, a gas permeable microporous film that is readily heat-sealable over its entire surface without disturbing its orientation and other characteristics comprising an oriented and voided polyolefin matrix polymer film but no polymeric grease-proof layer taken from the group consisting of high-density polyethylene, polypropylene and ethylene based ionomeric resin, characterized in that it has on one or both surfaces a coating of a heat-sealable polymer having a melting point at least about 10°C lower than that of the voided matrix polymer.

The voided matrix polymer film of this invention preferably is made from a homopolymer of an olefin having 2 to 4 carbon atoms, a copolymer of such an olefin and another olefin having 2 to 8 carbon atoms, or a mixture of such polymers. More preferably it is made from homopolypropylene or a mixture of homopolypropylene with a propylene-ethylene copolymer.

The heat-sealable layer is much thinner than the matrix polymer layer. Preferably, the thickness ratio of matrix polymer to heat-sealable polymer will be at least about 3 to 1 up to about 20 to 1, more preferably about 5 to 1 to 20 to 1, and the heat-sealable layer will be on only one side of the matrix layer. If a heat-sealable layer is present on both sides, the layer composition will normally be the same on each side.

Preferably, the heat-sealable polymer is a low density (0.917-0.930 g/cc) polyethylene. In general, polymers that can serve as the heat-sealable layer include, by way of example, medium and low density polyethylene, including copolymers and terpolymers of ethylene with alpha-olefins of 3 to 8 carbon atoms, having melting points between about 50 and 120°C, ethylene-vinyl acetate copolymers, ethylene-acrylic acid copolymers and ionomers thereof, and poly(vinylidene chloride).

Also according to the invention, a method for making a gas permeable microporous film that is readily heat-sealable over its entire surface without disturbing its orientation and other characteristics comprising an oriented and voided polyolefin matrix polymer film but no polymeric grease-proof layer taken from the group consisting of high-density polyethylene, polypropylene and ethylene based ionomeric resin including the steps of incorporating more than about 30% to 70% by weight of a particulate filler material in a polyolefin matrix film and orienting the film by stretching in two directions, thereby causing the film to tear away from the particles of the filler and create corresponding voids in the film, characterized in that before final stretching, the matrix film is coated on one or both surfaces with a heat-sealable polymer having a melting point at least about 10°C lower than that of the matrix film.

Preferably, the matrix polymer and the heat-sealable polymer film are prepared by conventional simultaneous coextrusion through a single die that brings them together while each is in the molten state. In a single step, a structure having two or three layers is formed, in which adhesion between the layers is assured. The films can also be prepared by an extrusion coating technique wherein the heat-sealable layer is applied, at a second extrusion station, to a previously formed matrix film. When this technique is employed, the matrix film is usually drawn longitudinally prior to the application of the heat-sealable film. This technique is not preferred, however, since less void formation in the heat-sealable layer is possible when only the single drawing is imposed on it.

The matrix is prepared for voiding by conventional incorporation of the particulate filler material, preferably about 30 to 70% by weight, based on the total weight of polymer plus filler material, of conventional particulate materials (described, for instance, in the U.S. patents already mentioned). Preferably, calcium carbonate is the voiding material. Other materials that may be used to produce voiding include, for example, barium sulfate, glass beads, and particulate, high melting organic polymers such as nylon. The choice of a voiding material is not critical to the practice of the invention, although the intended application sometimes dictates selection of a specific material.

It is critical that the heat-sealable layer be a polymer that melts at a temperature at least about 10°C below the melting point of the matrix polymer. It is, therefore, able to be melted in order to form a heat seal without disturbing the orientation of the matrix. Moreover, the low melting polymer is molten at the temperature of orientation of the matrix polymer and as a result it tends to separate at the locations of voids in the matrix and to acquire corresponding pores during the orienting draw. Accordingly, a majority of the voids formed in the oriented matrix are left unobstructed. In the other locations, where the heat-sealable layer fails to develop a corresponding pore and is intact, that layer is so thin that it exhibits a substantial degree of inherent permeability. Alternatively, it is possible but not necessary to have a void-producing particulate in the heat seal layer. As a result of the pore-formation and inherent permeability of the thin heat-sealable layer, the porosity and permeability of the oriented matrix layer are substantially retained.

Following preparation of the layered film structure, the film is subjected to either a uniaxial or a biaxial draw to impose molecular orientation on the matrix layer and to cause voiding and pore formation in the individual layers. Orientation is carried out according to conventional techniques at a temperature above the glass transition temperature and below the melting point. In the case of the polyolefins, this will usually be between about 130 and 150°C. For maximum voiding and pore formation in the matrix film, it is preferred that the temperature be maintained as low as possible. Typical orientation levels are about 4 to 6x in each direction for most polyolefin films.

The invention is demonstrated in the following examples. In these examples the film properties determined are Gurley porosity and heat seal characteristics. Gurley porosity measures the time needed for 10 ml of air at 12.2 in. of water pressure to pass through 1 in.² of film. It is determined by ASTM D726-5B (reapproved 1971), Method B. The heat seals are made by use of a Sentinel impulse-type heat sealer (Model 12-12AS) to seal the film to itself or other substrates. The properties of the seal are determined by using an Instron tensile tester or similar device to peel the seals as specified by ASTM F88, in which the units for Avg. Peel Strength (g/in. width)may be expressed as the grams force required to peel a sealed strip 25.4 mm in width.

### Example 1

A film according to the invention was prepared by coextruding a 50/50 mixture of propylene homopolymer and a propylene-ethylene copolymer containing 60% calcium carbonate based on the weight of the total composition with a low density polyethylene (VLDPE from Union Carbide). The homopolymer was Pro-fax®6501 (MFR 4; MP 164°C) from HIMONT Incorporated and the copolymer was Pro-fax®SA-841 (MFR 8; MP 156°C), also from HIMONT Incorporated. The matrix layer thickness was 457,2 µm (18 mil), the polyethylene layer was 63,5 µm (2.5 mil).

The film was simultaneously biaxially drawn 6x² at 140°C.The Gurley Porosity of this film was 720 seconds. By contrast the Gurley Porosity of the oriented matrix without a heat-seal layer is about 60 seconds.

The film was heat sealed to itself in an impulse-type heat sealer at various temperatures. Seal properties are recorded in Table I.

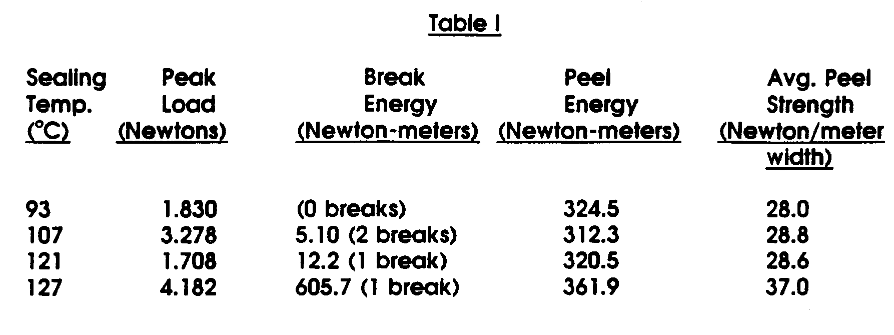

### Example 2

Using the same combination of materials as was employed in Example 1, a 406,4 µm/127 µm (16 mil/5 mil) film was extruded and subjected to a simultaneous 5x longitudinal and transverse draw in a T. M. Long stretcher at 140°C. Gurley porosity of the resulting film was 480 seconds.

Seal properties are recorded in Table II.

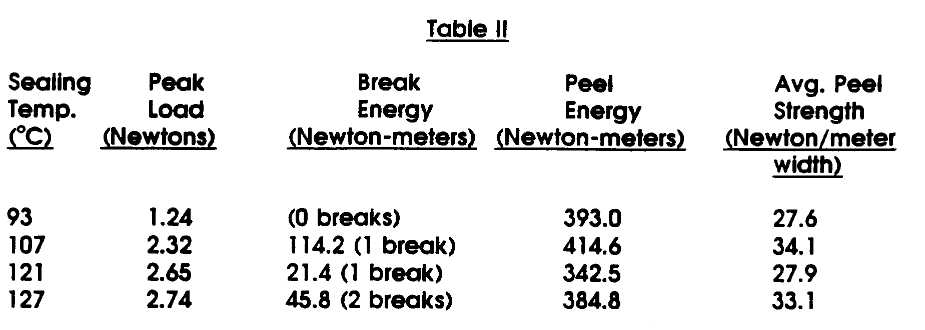

### Example 3

The same matrix polymer as was used in Example 1 was coextruded with a propylene--6% ethylene copolymer (MFR 4.0; MP 129°C) to form a 584.2 µm/177.8 µm (23 mil/7 mil) film. This film was subjected to a simultaneous 6x longitudinal and transverse draw and a 6x transverse draw in a T. M. Long stretcher at 140°C. Gurley porosity of the resulting film was 2100 seconds. Sealing properties are recorded in Table III.

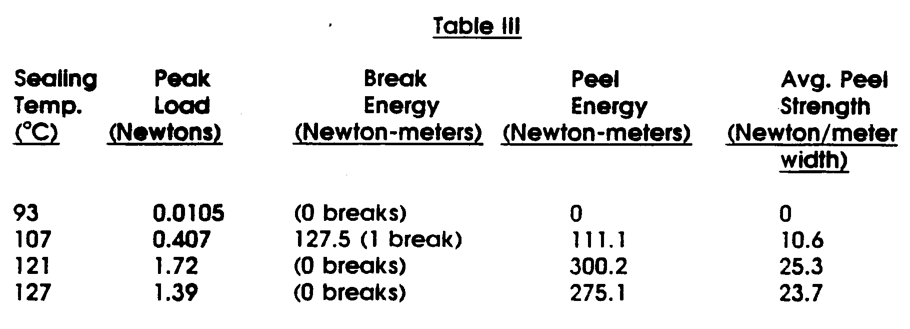

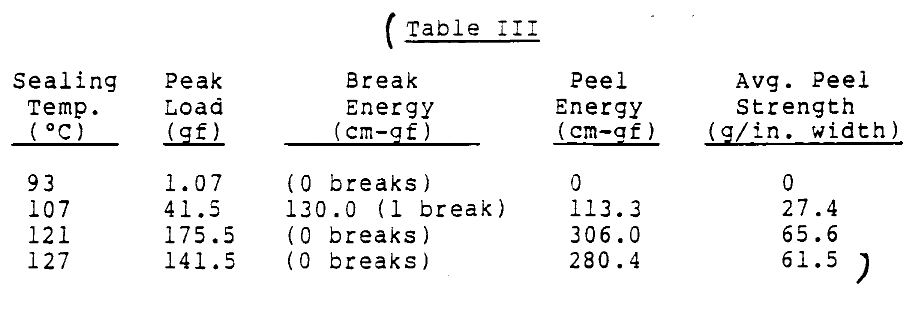

### Example 4

The porous, heat-sealable film from Example 2 was heat-sealed to various substrates in an impulse type sealer and exhibited the seal properties reported in Table IV.

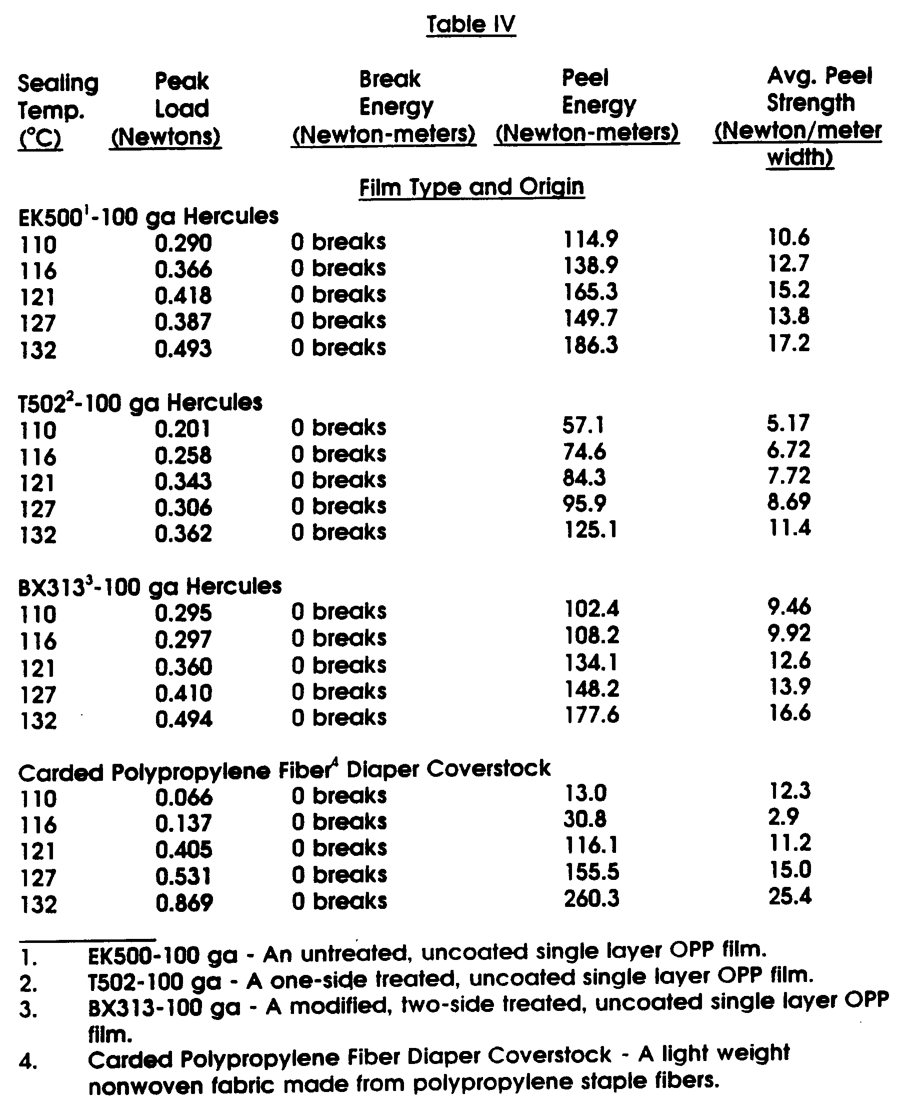

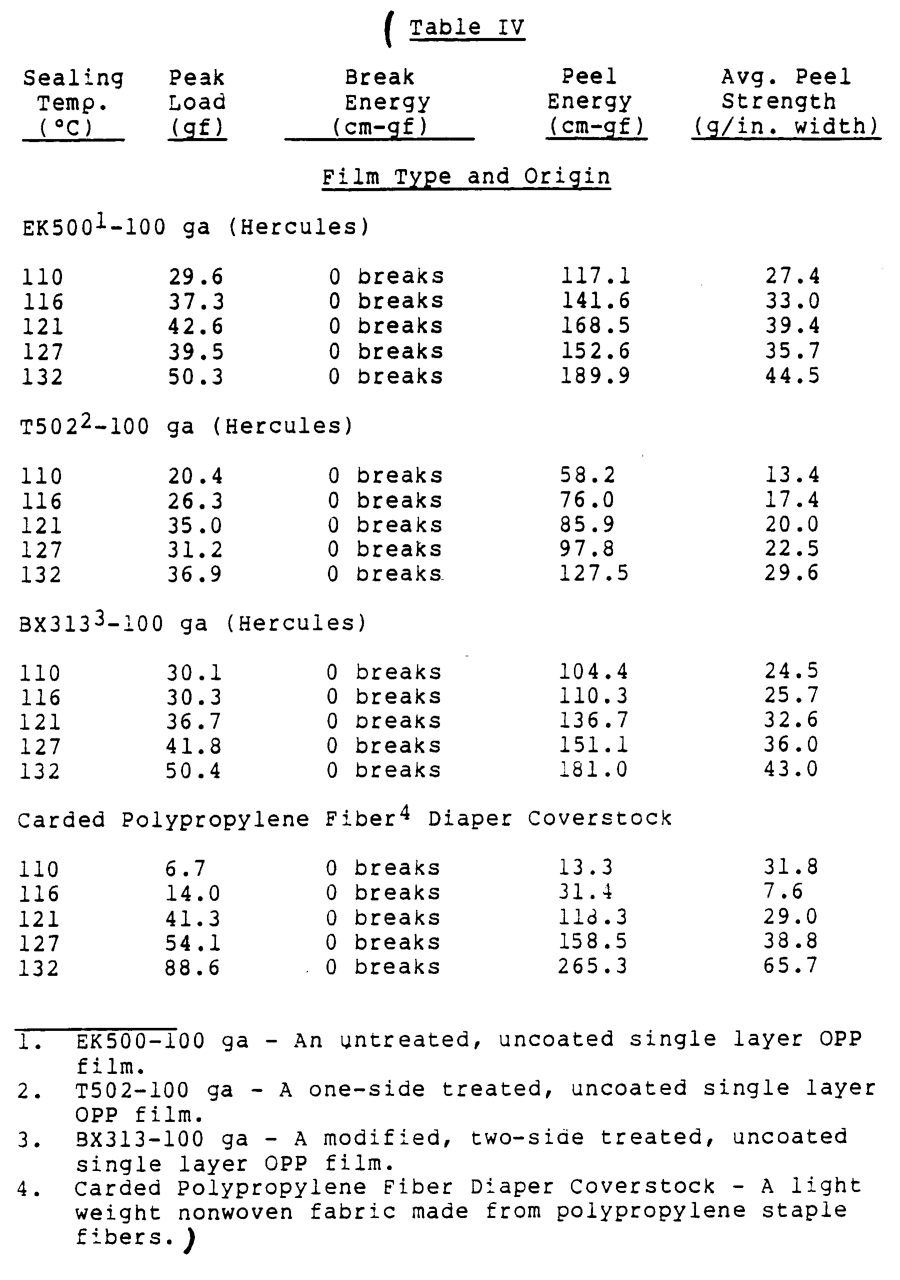

## Claims

1. A gas permeable microporous film that is readily heat-sealable over its entire surface without disturbing its orientation and other characteristics comprising an oriented and voided polyolefin matrix polymer film but no polymeric grease-proof layer taken from the group consisting of high-density polyethylene, polypropylene and ethylene based ionomeric resin, characterized in that it has on one or both surfaces a coating of a heat-sealable polymer having a melting point at least about 10°C lower than that of the voided matrix polymer.

2. A gas permeable microporous film as claimed in claim 1, further characterized in that the thickness ratio of matrix polymer to heat-sealable polymer is about 3 to 1 to about 20 to 1.

3. A gas permeable microporous film as claimed in claim 2, further characterized in that the thickness ratio of matrix polymer to heat-sealable polymer is at least 5 to 1.

4. A gas permeable microporous film as claimed in claim 1, 2 or 3, further characterized in that the heat-sealable polymer is medium or low density polyethylene, a copolymer or terpolymer of ethylene with an alpha-olefin of 3 to 8 carbon atoms having a melting point between about 50 and 120°C, an ethylene-vinyl acetate copolymer, an ethylene-acrylic acid copolymer or an ionomer thereof, or poly(vinylidene chloride).

5. A gas permeable microporous film as claimed in claim 4, further characterized in that the heat-sealable polymer is polyethylene or 3 copolymer of ethylene.

6. A gas permeable microporous film as claimed in claim 4, further characterized in that the voided matrix film is made from a homopolymer of an olefin having 2 to 4 carbon atoms, a copolymer of such an olefin and another olefin having 2 to 8 carbon atoms, or a mixture of the said homopolymer copolymer.

7. A method for making a gas permeable microporous film that is readily heat-sealable over its entire surface without disturbing its orientation and other characteristics comprising an oriented and voided polyolefin matrix polymer film but no polymeric grease-proof layer taken from the group consisting of high-density polyethylene, polypropylene and ethylene based ionomeric resin including the steps of incorporating 30% to 70% by weight of a particulate filler material in a polyolefin matrix film and orienting the film by stretching in two directions, thereby causing the film to tear away from the particles of the filler and create corresponding voids in the film, characterized in that before final stretching, the matrix film is coated on one or both surfaces with a heat-sealable polymer having a melting point at least about 10°C lower than that of the matrix film.

8. A method for making a gas permeable microporous film as claimed in claim 7, further characterized in that the matrix film is coated with the heat-sealable polymer by simultaneous coextrusion through a single die that brings them together in the molten state.

## Patentansprüche

1. Eine gasdurchlässige mikroporöse Folie, die, ohne daß ihre Orientierung oder andere charakteristische Merkmale gestört werden, über ihre gesamte Oberfläche leicht heißversiegelbar ist, und die eine orientierte und mit Hohlräumen ausgestattete Matrixpolymerfolie aus Polyolefin, aber keine fettdichte Polymerschicht aus der Gruppe, die aus Polyethylen hoher Dichte, Polypropylen und lonomerharz auf Ethylenbasis besteht, umfaßt, dadurch gekennzeichnet, daß sie auf einer oder beiden Oberflächen eine Schicht eines heißversiegelbaren Polymers besitzt, das einen Schmelzpunkt hat, der mindestens um 10°C tiefer liegt als der des mit Hohlräumen ausgestatteten Matrixpolymers.

2. Eine gasdurchlässige mikroporöse Folie wie in Anspruch 1 beansprucht, weiterhin dadurch gekennzeichnet, daß das Dickeverhältnis von Matrixpolymer zu heißversiegelbarem Polymer ungefähr 3 zu 1 bis ungefähr 20 zu 1 ist.

3. Eine gasdurchlässige mikroporöse Folie wie in Anspruch 2 beansprucht, weiterhin dadurch gekennzeichnet, daß das Dickeverhältnis von Matrixpolymer zu heißversiegelbarem Polymer mindestens 5 zu 1 ist.

4. Eine gasdurchlässige mikroporöse Folie wie in Anspruch 1, 2 oder 3 beansprucht, weiterhin dadurch gekennzeichnet, daß das heißversiegelbare Polymer Polyethylen mittlerer oder niedriger Dichte, ein Copolymer oder Terpolymer von Ethylen mit einem Alpha-Olefin mit 3 bis 8 Kohlenstoffatomen, das einen Schmelzpunkt zwischen ungefähr 50 und 120 °C aufweist, ein Ethylen-Vinylacetat-Copolymer, ein Ethylen-Acrylsäure-Copolymer oder ein Ionomer davon oder Poly(vinylidenchlorid) ist.

5. Eine gasdurchlässige mikroporöse Folie wie in Anspruch 4 beansprucht, weiterhin dadurch gekennzeichnet, daß das heißversiegelbare Polymer Polyethylen oder ein Copolymer von Ethylen ist.

6. Eine gasdurchlässige mikroporöse Folie wie in Anspruch 4 beansprucht, weiterhin dadurch gekennzeichnet, daß die mit Hohlräumen ausgestattete Matrixfolie aus einem Homopolymer eines Olefins mit 2 bis 4 Kohlenstoffatomen, einem Copolymer eines solchen Olefins und eines anderen Olefins mit 2 bis 8 Kohlenstoffatomen oder einem Gemisch des besagten Homopolymer-Copolymers hergestellt wird.

7. Ein Verfahren zur Herstellung einer gasdurchlässigen mikroporösen Folie, die, ohne daß ihre Orientierung oder andere charakteristische Merkmale gestört werden, über ihre gesamte Oberfläche leicht heißversiegelbar ist, und die eine orientierte und mit Hohlräumen ausgestattete Matrixpolymerfolie aus Polyolefin, aber keine fettdichte Polymerschicht aus der Gruppe, die aus Polyethylen hoher Dichte Polypropylen und Ionomerharz auf Ethylenbasis besteht, umfaßt, welche die Schritte des Einbaus von mehr als ungefähr 30 Gew.-% bis 70 Gew.-% eines aus Partikeln bestehenden Füllmaterials in eine Matrixfolie aus Polyolefin und der Orientierung der Folie durch Strecken in zwei Richtungen, wodurch verursacht wird, daß die Folie von den Partikeln des Füllstoffes abreißt und entsprechende Hohlräume in der Folie bildet, einschließt, dadurch gekennzeichnet, daß die Matrixfolie vor der letzten Streckung auf einer oder beiden Oberflächen mit einem heißversiegelbaren Polymer beschichtet wird, das einen Schmelzpunkt aufweist, der mindestens um 10 °C niedriger ist als der der Matrixfolie.

8. Ein Verfahren zur Herstellung einer gasdurchlässigen mikroporösen Folie wie in Anspruch 7 beansprucht, weiterhin dadurch gekennzeichnet, daß die Matrixfolie mit dem heißversiegelbarem Polymer durch gleichzeitige Coextrusion durch eine Einzeldüse, die sie in geschmolzenem Zustand zusammenbringt, beschichtet wird.

## Revendications

1. Film microporeux, perméable aux gaz, qui peut être aisément thermosoudé sur la totalité de sa surface sans perturber son orientation et d'autres caractéristiques, comprenant un film de polymère à matrice polyoléfinique à vides, mais sans couche polymérique étanche aux graisses, que l'on choisit dans le groupe formé par le polypropylène, le polyéthylène haute densité et une résine isomérique à base d'éthylène, caractérisé en ce qu'il possède, sur l'une de ses surfaces ou sur ses deux surfaces, un revêtement d'un polymère thermosoudable possédant un point de fusion inférieur d'au moins environ 10°C à celui du polymère formant la matrice à vides.

2. Film microporeux, perméable aux gaz, suivant la revendication 1, caractérisé en ce que le rapport d' épaisseur du polymère formant la matrice au polymère thermosoudable varie d'environ 3 à 1 à environ 20 à 1.

3. Film microporeux, perléable aux gaz, suivant la revendication 2, caractérisé en ce que le rapport d' épaisseur du polymère formant la matrice au polymère thermosoudable atteint au mouins 5 à 1.

4. Film microporeux, perméable aux gaz, suivant la revendication 1, 2 ou 3, caractérisé en ce que le polymère thermosoudable est du polyéthylène à moyenne ou basse densité, un copolymère ou un terpolymère de l' éthylène avec une alphaoléfine possédant de 3 à 8 atomes de carbone, possédant un point de fusion compris entre environ 50 et 120°C, un copolymère de l'éthylène et de l'acétate de vinyle, un copolymère de l'éthylène et de l'acide acrylique, ou un ionomère de celui-ci, ou du poly(chlorure de vinylidène).

5. Film microporeux, perméable aux gaz, suivant la revendication 4, caractérisé en ce que le polymère thermosoudable est constitué de polyéthylène ou d'un copolymère de l'éthylène.

6. Film microporeux, perméable aux gaz, suivant la revendication 4, caractérisé en ce que le film constituant la matrice à vides est réalisé à partir d'un homopolymère d'une oléfine possédant de 2 à 4 atomes de carbone, un copolymère d'une telle oléfine et d'une autre oléfine possédant de 2 à 8 atomes de carbone, ou un mélange de l'homopolymère et du copolymère.

7. Procédé de fabrication d'un film microporeux, perméable aux gaz, qui peut être aisément thermosoudé sur la totalité de sa surface sans perturber l'orientation et d'autres caractéristiques, comprenant un film de polymère à matrice de polyoléfine à vides, mais pas de couche polymérique étanche aux graisses, que l'on choisit dans le groupe formé par le polypropylène, le polyéthylène haute densité et une résine isomérique à base d'éthylène, comprenant les étapes d'incorporation de 30% à 70% en poids d'une matière de charge particulaire dans un film formant matrice polyoléfinique et d'orientation du film par étirage dans deux directions, de façon à amener le film à se déchirer en s'écartant des particules de la charge et à créer des vides correspondants dans le film, caractérisé en ce que, avant l'étirage final, le film formant la patrice est revêtu sur l'une de ses surfaces ou sur ses deux surfaces, d'un polymère thermosoudable possédant un point de fusion inférieur d'au moins environ 10°C à celui du film formant la matrice.

8. Procédé de fabrication d'un film microporeux, perméable aux gaz, suivant la revendication 7, caractérisé en ce que l'on revêt le film formant la matrice du polymère thermosoudable par co-extrusion simultanée à travers une seule filière qui les rassemble à l'état fondu.
